# EUROPEAN PATENT APPLICATION

(11) **EP 4 628 551 A1**
(43) Date of publication of application: **08.10.2025**
(21) Application number: 24741254.7
(22) Date of filing: 09.01.2024
(51) Int. Cl.: C09D 4/02, C09D 167/06, C09D 175/14, C08F 2/46

(54) **COATING MATERIAL FOR STEEL SHEET, AND STEEL SHEET HAVING ELECTRON-BEAM-CURED COATING LAYER FORMED THEREFROM**

(30) Priority: 10.01.2023 CN 202310033271
(71) Applicant: BAOSHAN IRON & STEEL CO., LTD., Shanghai 201900 (CN)
(72) Inventor: MA, Yuan, Shanghai 201900 (CN); LAN, Zhongxu, Shanghai 201900 (CN); FANG, Wenqi, Shanghai 201900 (CN); DAI, Yigang, Shanghai 201900 (CN)
(74) Representative: Nederlandsch Octrooibureau
(86) International application number: PCT/CN2024/071405
(87) International publication number: WO 2024/149257

(57) **Abstract**

An electron-beam-cured coating material for a steel sheet, which coating material comprises the following effective components: a composite matrix resin A: 40-60 parts by weight; an organosilicon compound B: 3-10 parts by weight; a monofunctional ethylenically unsaturated and polymerizable monomer C: 15-25 parts by weight; an acrylic acid phosphate compound D: 5-15 parts by weight; and a titanium salt or zirconium salt compound of acrylic acid E: 0.3-2.0 parts by weight; wherein A comprises an aliphatic polyurethane acrylate oligomer A1 and an amine modified epoxy diacrylate oligomer A2, and the parts by weight ratio of A1 to A2 is: 1.0-5.0; based on the weight of A1, A1 comprises 20-30 wt% of isobornyl acrylate, and based on the weight of A2, A2 comprises 30-40 wt% of dipropylene glycol diacrylate. And a steel sheet, which comprises: a steel substrate, a plating layer on the surface of the steel substrate, and an electron-beam-cured coating layer coated on the surface of the plating layer.

## Description

### TECHNICAL FIELD

The present invention relates to a coating material, in particular to an electron-beam-cured coating material for a steel sheet.

### BACKGROUND

A coated steel sheet, also referred to as a pre-coated steel sheet, is a steel sheet manufactured by applying one or more layers of organic coatings onto the surface of metal coil (e.g., cold-rolled sheet, hot-dip galvanized sheet, aluminum-coated sheet, or zinc-aluminum-magnesium alloy-coated sheet) used as the base material, followed by a curing process to form the coating.

The traditional production process of pre-coated steel sheet is to apply water based or organic solvent based coatings to the surface of the strip steel, and then dry or cure them into a film by thermal curing. This production method has long been the first choice in the steel coil industry due to its high process maturity and stable quality. However, due to the restrictions of the curing rates of the heat-cured coating and the space occupied by the equipment, the production efficiency of the traditional pre-coated steel sheet cannot be further improved. In addition, the thermal curing method consumes a lot of energy, has high infrastructure costs, and has high operating expenses. Moreover, the evaporation of solvents causes environmental pollution, and combustion generates substantial CO₂ emissions.

To overcome the above issues, low energy, fasting curing, and solvent-free technologies have become the current development direction, among which electron beam (EB) curing is the most promising. EB curing is a process that uses electron beams as the excitation source in the coating curing procedure, enabling solvent-free coatings to achieve instantaneous curing and film formation at room temperature. Compared to traditional heating curing, EB curing has numerous advantages such as environmental protection, energy efficiency, high productivity, and low carbon emissions. Currently, EB curing has been applied in industries such as wood, paper, and optical fibers. The coating cured by EB in these fields generally do not require further processing procedures, and their working environments are relatively mild.

However, in the steel sheet coating field, the cured coatings still require subsequent processing procedures such as rolling and stamping, as well as withstand harsh outdoor service conditions. This demands that the EB-cured coating layer on metal substrate possess excellent adhesion performance, particularly post-forming adhesion performance, wet adhesion after water penetration, and corrosion resistance. But existing EB-cured coating layer cannot achieve these properties on metal substrates.

### SUMMARY

One objective of the present invention is to provide a coating material for a steel sheet, an electron-beam-cured coating layer formed by applying the coating material to the steel sheet has excellent dry and wet adhesion performance, as well as good under-film corrosion resistance.

In order to achieve the above-mentioned objective, the present invention provides a coating material for a steel sheet, wherein the coating material comprises the following effective components:
a composite matrix resin A: 40-60 parts by weight;
an organosilicon compound B: 3-10 parts by weight;
a monofunctional ethylenically unsaturated and polymerizable monomer C: 15-25 parts by weight;
an acrylic acid phosphate compound D: 5-15 parts by weight;
a titanium salt or zirconium salt compound of acrylic acid E: 0.3-2.0 parts by weight;
wherein the composite matrix resin A comprises an aliphatic polyurethane acrylate oligomer A1 and an amine modified epoxy diacrylate oligomer A2, with a weight ratio of A1 to A2 being 1.0-5.0; based on the weight of A1, A1 comprises 20-30 wt% of isobornyl acrylate, and based on the weight of A2, A2 comprises 30-40 wt% of dipropylene glycol diacrylate.

The present application further provides a coating material for a steel sheet, wherein effective components of the coating material consists of the following :
a composite matrix resin A: 40-60 parts by weight;
an organosilicon compound B: 3-10 parts by weight;
a monofunctional ethylenically unsaturated and polymerizable monomer C: 15-25 parts by weight;
an acrylic acid phosphate compound D: 5-15 parts by weight;
a titanium salt or zirconium salt compound of acrylic acid E: 0.3-2.0 parts by weight;
wherein the composite matrix resin A comprises an aliphatic polyurethane acrylate oligomer A1 and an amine modified epoxy diacrylate oligomer A2, with a weight ratio of A1 to A2 being 1.0-5.0; based on the weight of A1, A1 comprises 20-30 wt% of isobornyl acrylate, and based on the weight of A2, A2 comprises 30-40 wt% of dipropylene glycol diacrylate.

Preferably, in addition to the above effective components, the balance of the coating material of the present invention is other inevitable impurities.

The coating material of the present invention is applied to the surface of the steel sheet with the plating layer, forming the electron-beam-cured (EB-cured) coating layer through the electron beam curing process. Preferably, a topcoat is further applied onto the surface of the electron-beam-cured coating layer to optimize the appearance of the steel sheet and/or enhance protection for the surface of the plating layer on the substrate and coating layer. The flexibility performance of the EB-cured coating layer, as well as its dry and wet adhesion performance to the metal substrate (specifically the steel sheet with a plating layer in the present invention), and adhesion performance to the topcoat, are all closely correlated to the specific type of composite matrix resin A. The dry adhesion performance refers to the adhesion performance between the coating layer and the metal substrate when the coated steel sheet is in a dry state, and the wet adhesion performance refers to the adhesion performance between the coating layer and the metal substrate when the coated steel sheet is in a wet state.

In the present invention, the composite matrix resin A comprises an aliphatic polyurethane acrylate oligomer A1 and an amine modified epoxy diacrylate oligomer A2. Wherein, based on the weight of A1, A1 comprises 20-30 wt% of isobornyl acrylate, the polyurethane segments of which provide the coating with excellent flexibility. Based on the weight of A2, A2 comprises 30-40 wt% of dipropylene glycol diacrylate, which provides the coating with excellent adhesion to the metal substrate surface and compatibility with topcoats.

In the coating material of the present invention, the weight ratio of A1 to A2 is 1.0-5.0. If the ratio is less than 1.0, the flexibility of the coating can decrease; if the ratio is higher than 5.0, the adhesion between the coating and both the metal substrate and topcoat can decrease. Preferably, A1/A2 is 1.5-4.0, which can achieve superior coating adhesion performance.

In addition, based on 100 parts by weight of the total coating material, the composite matrix resin A accounts for 40-60 parts by weight in the coating material. If its content is less than 40 parts by weight, the flexibility of the coating and the adhesion to the topcoat and the metal substrate surface can decrease. If its content is higher than 60 parts by weight, the adhesion to the subsequent topcoat and the wet adhesion to the metal substrate can decrease.

In the present invention, the aliphatic polyurethane acrylate oligomer A1 preferably has the following properties: a viscosity at 25°C of 15000-25000 mPa·s, a molecular weight of 2000-4000, a functionality of 2, a density of 1.0-1.2 g/m², and a glass transition temperature (Tg) of 35-55°C.

In the present invention, the amine modified epoxy diacrylate oligomer A2 preferably has the following properties: a viscosity at 25°C of 500-1500 mPa·s, a functionality of 2, a density of 1.0-1.2 g/m², a glass transition temperature (Tg) of 70-90°C, and an acid value of 2-4 mg KOH/g.

In the present invention, the role of the organosilicon compound B is to further improve the wet adhesion and under-film corrosion resistance of the EB-cured coating layer and the metal substrate. On the one hand, the vinyl groups in the organosilicon compound can participate in reactions during radiation curing, combining with the composite matrix resin A. On the other hand, when water or moisture, as well as water or moisture carrying corrosive agents (such as oxygen, carbon dioxide, etc.) permeates through the coating and reaches the substrate interface, the organosilicon compound B in the cured coating undergoes hydrolysis in the presence of water, generating Si-OH groups. These Si-OH groups then undergo dehydration condensation with Me-OH groups (Me = metal) on the metal surface, forming strong Si-O-Me covalent bonds at the metal interface. This mechanism prevents further diffusion of the corrosive agents, thereby reducing under-film corrosion and further improving the wet adhesion between the coating and the metal substrate interface. In addition, another role of the organosilicon compound B is to improve the bonding strength between the EB-cured coating layer and the topcoat (such as a solvent-based topcoat or a radiation-cured topcoat).

Preferably, the content of organosilicon compound B in the coating material is 3-10 parts by weight. If its content is less than 3 parts by weight, sufficient wet adhesion and under-film corrosion resistance cannot be obtained. If its content is higher than 10 parts by weight, the surface energy of the cured coating can be reduced, resulting in shrinkage defects during the topcoat application or curing process and a decrease in the adhesion between the EB-cured coating layer and the topcoat.

In the present invention, the monofunctional ethylenically unsaturated and polymerizable monomer C is a monofunctional reactive acrylic monomer with a relatively high Tg. The monofunctional ethylenically unsaturated and polymerizable monomer C participates in crosslinking reaction during the electron beam curing process, and the reactivity of its monofunctional group makes the coating have a lower shrinkage rate during the curing process, thereby ensuring the adhesion performance of the formed coating to the metal substrate. Preferably, the weight proportion of the monofunctional ethylenically unsaturated and polymerizable monomer C in the coating material is 15-25 parts by weight. If its content is less than 15 parts by weight, the curing degree of the coating is insufficient, and the dry and wet adhesion properties are reduced. If its content is higher than 25 parts by weight, the curing shrinkage rate of the coating can be increased, adversely affecting the dry adhesion performance of the coating to the metal substrate.

In the present invention, the acrylic acid phosphate compound D functions as an adhesion promoter. The adhesion promoter can significantly improve the dry adhesion and wet adhesion of the EB cured coating to the metal substrate through micro-phosphatization with the metal surface. Preferably, the acrylic acid phosphate compound D in the coating material is 5-15 parts by weight. If its content is less than 5 parts by weight, the dry adhesion and wet adhesion between the cured coating and the metal substrate can decrease. If its content is higher than 15 parts by weight, the adhesion between the cured coating and the topcoat can deteriorate.

In the present invention, the titanium salt or zirconium salt compound of acrylic acid E functions as an interface corrosion inhibitor. The primary function of the interface corrosion inhibitor is to improve the resistance of the coating to under-film corrosion. On the one hand, the acrylic acid component participates in film formation during the electron beam curing process. On the other hand, when water or moisture, especially water or moisture carrying corrosive agents (such as oxygen, carbon dioxide, etc.) permeates through the coating or reaches the interface between the coating and metal substrate through defects, the metal salt compounds in the coating undergo passivation reactions with the metal substrate surface in the presence of water, thereby preventing further spread of water or other corrosive agents. Preferably, the titanium salt or zirconium salt compound of acrylic acid E in the coating material is 0.3-2.0 parts by weight. If its content is less than 0.3 parts by weight, the under-film corrosion resistance effect is not significant. If its content is higher than 2.0 parts by weight, the flexibility of the cured coating can be affected.

Preferably, in the some embodiments of the present invention, the effective components of the coating material further comprise at least one selected from the following components:
an anti-rust pigment F: 2-5 parts by weight;
a hiding pigment G: 5-10 parts by weight;
an additive H: 0.2-1 parts by weight.

The rust prevention mechanism of the anti-rust pigment is that, when the corrosive agents (such as water and oxygen, etc.) penetrate to the interface between the cured coating and the metal substrate, a corrosion reaction occurs. The metal atoms at the interface are oxidized, losing electrons to form metal ions, and the oxygen gains electrons and is reduced to OH⁻ ions, thus forming an alkaline environment at the interface between the cured coating and the metal substrate. Preferably, the anti-rust pigment in the coating material is 2.0-5.0 parts by weight. If its content is less than 2.0 parts by weight, the rust prevention effect is not significant. If its content is higher than 5.0 parts by weight, the flexibility of the cured coating can be adversely affected.

The purpose of the hiding pigment is to provide a certain degree of coverage for the metal substrate, which is beneficial to the uniformity of the appearance after applying the subsequent topcoat. Preferably, the hiding pigment in the coating material is 5.0-10.0 parts by weight. If its content is less than 5.0 parts by weight, the hiding effect is not significant. If its content is higher than 10 parts by weight, the adhesion of the cured coating can decrease.

Preferably, in the coating material of the present invention, the weight ratio of A1 to A2 is 1.5-4.0.

Preferably, in the coating material of the present invention, the organosilicon compound B comprises at least one selected from the following: vinyltrimethoxysilane, vinyltris(2-methoxyethoxy)silane, vinyltriisopropoxysilane, methylvinyldimethoxysilane, vinyltriacetoxysilane, (methacryloxy)propyltriacetoxysilane, (triethoxysilyl)propyl methacrylate, and triethoxysilane methacrylate.

Preferably, in the coating material of the present invention, the monofunctional ethylenically unsaturated and polymerizable monomer C comprises at least one selected from the following: hydroxypropyl methacrylate, cyclic trimethylolpropane formal acrylate, cyclic trimethylolpropane formal monoacrylate, isobornyl acrylate, lauryl acrylate, lauryl methacrylate, and octyl/decyl acrylate.

Preferably, in the coating material of the present invention, the acrylic acid phosphate compound D comprises at least one selected from the following: polyethylene glycol methacrylate phosphate, bis(hydroxyethyl acrylate) phosphate, 2-hydroxyethyl methacrylate phosphate, and bis(methacryloyloxyethyl) hydrogen phosphate.

Preferably, in the coating material of the present invention, wherein the titanium salt or zirconium salt compound of acrylic acid E comprises at least one selected from the following: titanium triisopropoxide methacrylate, zirconium acrylate, and zirconium tetrakis(methacrylate).

Preferably, in the coating material of the present invention, the anti-rust pigment F comprises an ion-exchange-type alkaline silica powder.

The ion-exchange-type alkaline silica powder has a low density (e.g., a bulk density of 0.15 g/cm³ or lower) and a high specific surface area (e.g., 80 m²/g or higher). It can dissolve into silicic acid or silicate ions in an alkaline environment. These soluble components can react with metal ions at the interface between the coating and the metal to form a protective layer of metal silicate, thereby preventing further corrosion of the metal at the interface.

More preferably, in the coating material of the present invention, the ion-exchange-type alkaline silica powder has an average particle size of 2-6 µm and a pH of 8-10.

Preferably, in the coating material of the present invention, the hiding pigment G comprises titanium dioxide.

Preferably, in the coating material of the present invention, the additive H comprises at least one selected from a leveling agent, a wetting agent, and an anti-settling agent.

Another objective of the present invention is to provide a steel sheet with an electron-beam-cured coating layer that exhibits excellent dry and wet adhesion as well as under-film corrosion resistance performance. The steel sheet can be used independently while meeting the subsequent processing and service conditions, or it can be used as a primer-coated substrate, with a topcoat applied on its surface to form a double-coat color-coated steel sheet, featuring good adhesion and overall corrosion resistance.

To achieve the above objective, the present invention provides a steel sheet, which comprises a steel substrate, a plating layer on a surface of the steel substrate, and an electron-beam-cured coating layer on a surface of the plating layer, wherein the electron-beam-cured coating layer is formed by applying the aforementioned coating material on the surface of the plating layer and curing it by electron beam irradiation.

It should be noted that the coating material of the present invention is solvent-free, and the coating formed by electron beam curing retains the same composition as the coating material, that is, the effective components and their proportions in the electron-beam-cured coating are exactly the same as those in the coating material.

Preferably, in the steel sheet of the present invention, the electron-beam-cured coating layer has a single-layer structure.

Preferably, in the steel sheet of the present invention, the thickness of the electron-beam-cured coating layer is 3-30 µm, preferably 3-10 µm. If the metal substrate has only the electron-beam-cured coating, the coating thickness can be 3-30 µm to ensure sufficient protection. If a topcoat is applied after the electron-beam-cured coating is formed on the metal substrate, the thickness of the electron-beam-cured coating is preferably 3-10 µm, and the topcoat can also provide some protective effect.

Preferably, in the steel sheet of the present invention, the plating layer comprises a hot-dip zinc layer, a hot-dip aluminum-zinc layer, a hot-dip zinc-aluminum-magnesium layer, and an electrogalvanized zinc layer.

Preferably, in the steel sheet of the present invention, the electron beam curing is carried out under the following conditions: in a protective atmosphere of nitrogen and oxygen mixture with an oxygen content of ≤ 200 ppm, with an electron beam voltage of 90-150 kV, and an electron beam dose of 10-60 kGy.

The present invention enables the formation of an electron-beam-cured coating layer having excellent dry and wet adhesion properties as well as under-film corrosion resistance performance by applying the abovementioned coating material to a steel sheet and curing it via electron beam irradiation.

### DETAILED DESCRIPTION

The coating material and steel sheet according to the present invention will be further explained and illustrated with reference to the following specific embodiments. However, these explanations and illustrations do not constitute an undue limitation on the technical solutions of the present invention.

### Examples 1-9 and Comparative Examples 1-9

To demonstrate the effects of the present invention, the inventors prepared coil coating material for forming electron-beam-cured coating of Examples 1-9 and coil coating material of Comparative Examples 1-9.

These coating materials were applied on the cold-rolled steel strips with plating layer, and a single-layer electron-beam-cured coating layer is formed on the surface of the steel strip through an electron beam curing process.

Wherein, the electron beam curing was carried out under the following conditions: in a nitrogen and oxygen mixture protective atmosphere with an oxygen content of ≤ 200 ppm, the electron beam voltage is 90-150 kV, and the electron beam dose is 10-60 kGy.

Table 1 lists the compositions of the plating layer and electron-beam-cured coating of the steel sheet of Examples 1-9 and Comparative Examples 1-9. It should be noted that the compositions of the electron-beam-cured coating are identical to those of the coil coating materials.

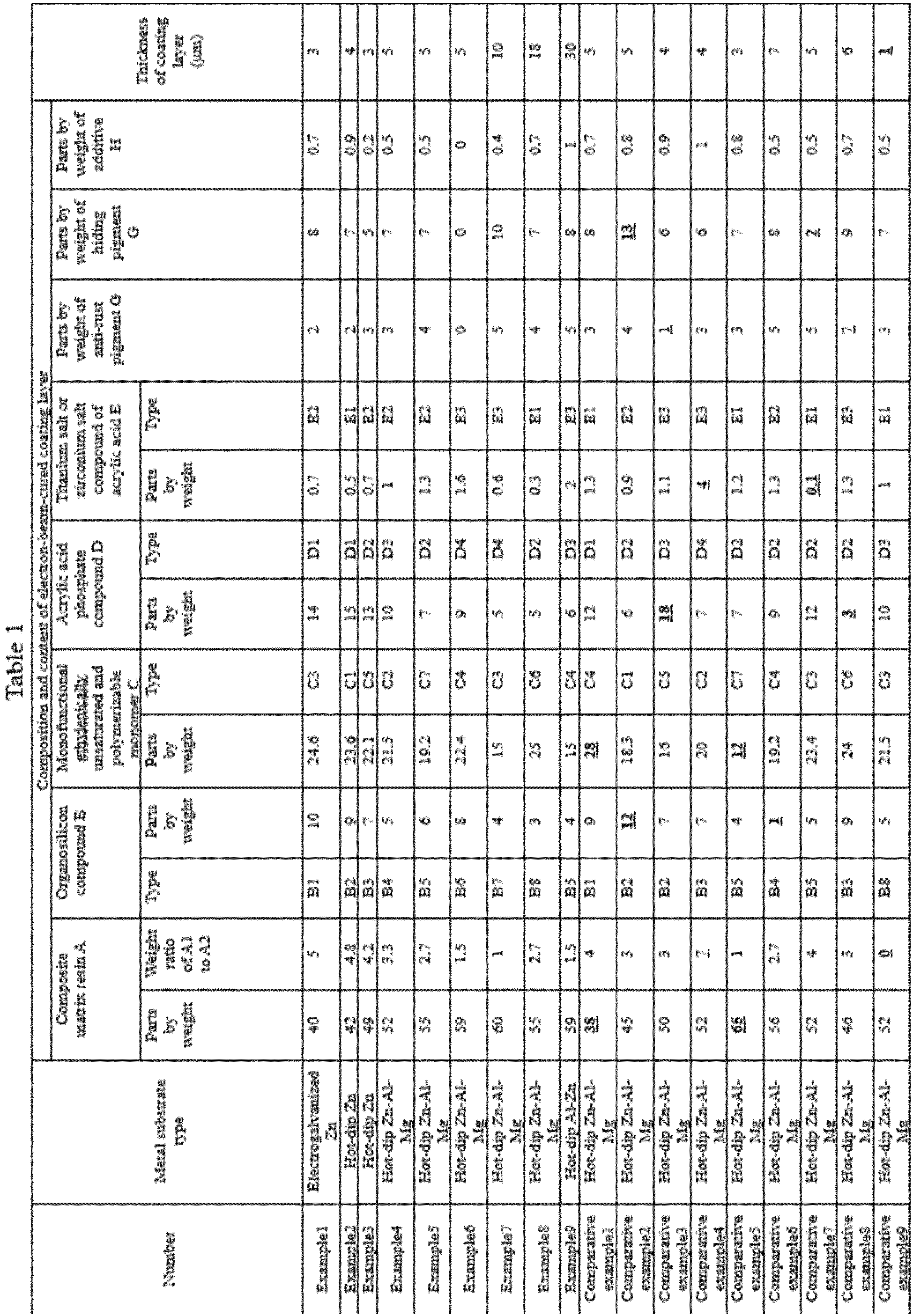

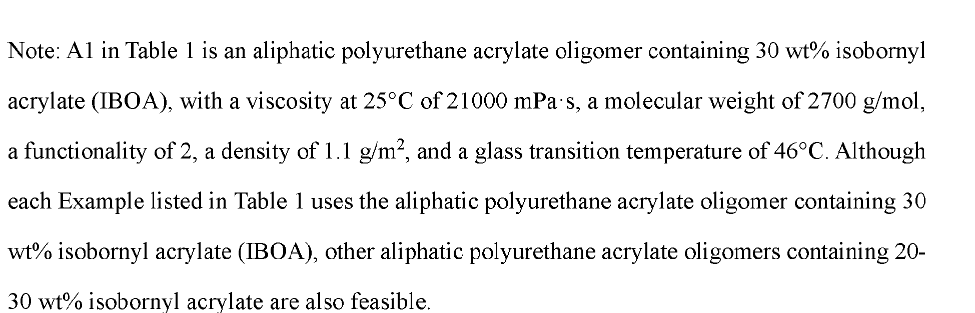

A2 in Table 1 is an amine modified epoxy diacrylate oligomer containing 35 wt% dipropylene glycol diacrylate (DPGDA), with a viscosity at 25°C of 1100 mPa·s, a functionality of 2, a density of 1.14 g/m², a glass transition temperature of 80°C, and an acid value of 3 mg KOH/g. Although each Example listed in Table 1 uses the amine modified epoxy diacrylate oligomer containing 35 wt% dipropylene glycol diacrylate (DPGDA), other amine modified epoxy diacrylate oligomers containing 30-40 wt% dipropylene glycol diacrylate are also feasible.

The specific types of the organosilicon compounds (B) in Table 1 are as follows:

| Code | Type |
|---|---|
| B1 | vinyltrimethoxysilane |
| B2 | vinyltris(2-methoxyethoxy)silane |
| B3 | vinyltriisopropoxysilane |
| B4 | methylvinyldimethoxysilane |
| B5 | vinyltriacetoxysilane |
| B6 | (methacryloxy)propyltriacetoxysilane |
| B7 | (triethoxysilyl)propyl methacrylate |
| B8 | triethoxysilane methacrylate |

The specific types of the monofunctional ethylenically unsaturated and polymerizable monomer (C) in Table 1 are as follows:

| Code | Type |
|---|---|
| C1 | hydroxypropyl methacrylate |
| C2 | cyclic trimethylolpropane formal acrylate |
| C3 | cyclic trimethylolpropane formal monoacrylate |
| C4 | isobornyl acrylate |
| C5 | lauryl acrylate |
| C6 | lauryl methacrylate |
| C7 | octyl/decyl acrylate |

The specific types of the adhesion promoters (D) in Table 1 are as follows:

| Code | Type |
|---|---|
| D1 | polyethylene glycol methacrylate phosphate |
| D2 | bis(hydroxyethyl acrylate) phosphate |
| D3 | 2-hydroxyethyl methacrylate phosphate |
| D4 | bis(methacryloyloxyethyl) hydrogen phosphate |

The specific types of the interface corrosion inhibitor in Table 1 are as follows:

| Code | Type |
|---|---|
| E1 | titanium triisopropoxide methacrylate |
| E2 | zirconium acrylate |
| E3 | zirconium tetrakis(methacrylate) |

The anti-rust pigment F in Table 1 is an ion-exchange-type alkaline silica powder with an average particle size of 3 µm and a pH of 8.5. It should be noted that the ion-exchange-type alkaline silica powder with an average particle size of 2-6 µm and a pH of 8-10 are also feasible. In addition, other pigments known in the art that can achieve anti-rust function are also feasible, as long as they fulfill the anticorrosion function.

The hiding pigment G in Table 1 is titanium dioxide. It should be noted that other pigments that known in the art can achieve hiding effects are also feasible and fall within the scope of protection of the present invention.

The additive H in Table 1 is selected from leveling agents, wetting agents, anti-settling agents, or combinations thereof. If a leveling agent is used, it can be an acrylic leveling agent or a silicone-based leveling agent. If a wetting agent is used, it can be a surfactant commonly used in existing coating materials. If an anti-settling agent is used, it can be a stearic acid derivative or fumed silica. In actual operation, adjustments can be made based on the type of steel sheet to be coated.

The types of additives used in the coating of the present invention are not significantly different from those in existing coatings. The purpose of the present invention is to adjust the effective components of the coating to achieve effective protection of the substrate during the use of the steel sheet.

It should be noted that although Table 1 lists single substances for components B, C, D, and E in each Example, mixtures are also feasible. For example, component B can be a mixture of B1 and B2, and component C can be a mixture of C2, C4, and C7, etc.

It should be noted that the solution of the present invention is to demonstrate the excellent performance of the electron-beam-cured coating layer formed by the designed coil coating material, and there is no special limitation on the type of steel substrate used. Therefore, in practical applications, those skilled in the art can select the appropriate steel sheet substrate according to specific requirement.

Table 2 lists the parameters of the electron beam curing process used to form the electron-beam-cured coating layer of Examples 1-9 and Comparative Examples 1-9.

**Table 2**

| Number | Electron beam voltage (kV) | Electron beam dose (kGy) |
|---|---|---|
| Example 1 | 150 | 10 |
| Example 2 | 130 | 40 |
| Example 3 | 140 | 25 |
| Example 4 | 100 | 30 |
| Example 5 | 100 | 35 |
| Example 6 | 120 | 50 |
| Example 7 | 90 | 60 |
| Example 8 | 90 | 40 |
| Example 9 | 150 | 30 |
| Comparative Example 1 | 150 | 30 |
| Comparative Example 2 | 120 | 40 |
| Comparative Example3 | 120 | 40 |
| Comparative Example 4 | 120 | 40 |
| Comparative Example 5 | 100 | 35 |
| Comparative Example 6 | 100 | 35 |
| Comparative Example 7 | 100 | 35 |
| Comparative Example 8 | 100 | 35 |
| Comparative Example 9 | 100 | 35 |

| | | |
|---|---|---|
| Note: Electron beam curing was carried out in a nitrogen protective atmosphere with an oxygen content of ≤ 200 ppm. | | |

Accordingly, to verify the beneficial effects of the coating material designed by the present invention and the electron-beam-cured coating formed therefrom, the coated steel sheets in the abovementioned Examples 1-9 and Comparative Examples 1-9 were sampled and tested as follows, and the obtained test data are listed in Table 3. Wherein, the specific test items and test methods are as follows:
1. Dry adhesion
1.1 T-bend test: the test was carried out according to section 7 bend test of GB/T 13448-2019. The evaluation criteria are as follows:
   ⊚: T-bend level ≤ 3T for no coating-substrate delamination
   ∘: T-bend level = 4T for no coating-substrate delamination
   Δ: T-bend level = 5T for no coating-substrate delamination
   ×: T-bend level ≥ 6T for no coating-substrate delamination
1.2 Cross-cut test: the test was carried out according to section 13 cross-cut adhesion test of GB/T 13448-2019, and the rating was carried out according to the rating table of cross-cut adhesion test shown in Table 1 of GB/T 13448-2019. The evaluation criteria are as follows:
   ⊚: Grade 0
   ∘: Grades 1-2
   Δ: Grades 3-4
   ×: Grades 5
1.3 Impact test: the test was carried out according to section 8 reverse impact test of GB/T 13448-2019. Test evaluation criteria are as follows:
   ⊚: Impact energy ≥ 9 J for no delamination between coating and substrate
   ∘: Impact energy = 7-9 J (excluding 9 J) for no delamination between coating and substrate
   Δ: Impact energy = 6-7 J (excluding 7 J) for no delamination between coating and substrate
   ×: Impact energy < 6 J for no delamination between coating and substrate
2. Wet adhesion
2.1 Boiling water test: immerse the steel sheet samples in boiling water for 2 hours. After removal, the coating appearance was visually evaluated for blistering or peeling and then perform the cross-cut testing according to section 13 cross-cut adhesion test of GB/T 13448-2019. The evaluation was performed according to the cross-cut adhesion test rating table shown in Table 1 of GB/T 13448-2019:
   ⊚: No blistering or peeling observed visually; cross-cut test rating = Grade 0
   ∘: Slight blistering (blistering area < 50%) with no peeling; cross-cut test rating = Grades 1-2
   Δ: Significant blistering (blistering area ≥ 50%) with no peeling; cross-cut test rating = Grades 3-4
   ×: Coating peeling observed; cross-cut test rating = Grade 5
2.2 Saltwater immersion test: immerse the samples in a 5 wt.% NaCl solution for 72 hours. After removal, the coating appearance was visually evaluated for blistering or peeling. The evaluation criteria are as follows:
   ⊚: No blistering or peeling observed
   ∘: Slight blistering (blistering area < 50%) with no peeling
   Δ: Significant blistering (blistering area ≥ 50%) with no peeling
   ×: Coating peeling observed
3. Under-film corrosive resistance test: Prior to testing, a straight line parallel to the long edge of the sample was scribed at the neutral position using a knife. The scribe line length was ≥ 50 mm, completely penetrating the coating, and positioned ≥ 30 mm from the sample edge. Salt spray testing was then conducted according to ASTM B117 for 1000 hours. The evaluation criteria are as follows:
   ⊚: Average single-side corrosion width at scribe line ≤ 3 mm
   ∘: Average single-side corrosion width at scribe line > 3 mm and ≤ 10 mm
   Δ: Average single-side corrosion width at scribe line > 10mm and ≤ 15 mm
   ×: Average single-side corrosion width at scribe line > 15 mm
4. Test of adhesion to topcoat and overall corrosion resistance of coated steel sheet
   For Examples 1-9 and Comparative Examples 1-9, the EB-cured coated steel sheets with the electron-beam-cured coating layer were coated with a conventional solvent-based polyester topcoat (15 µm film thickness) and cured at a panel metal temperature (PMT) of 241-254°C for 20-30 seconds. The fully coated samples were then subjected to the following tests to evaluate the adhesion between the EB-cured coating and topcoat, as well as the overall corrosion protection provided by the combined coating system.
4.1 T-bend test: the test was carried out according to section 7 bend test of GB/T 13448-2019. Test evaluation criteria are as follows:
   ⊚: T-bend level ≤ 3T for no delamination between EB-cured coating and topcoat
   ∘: T-bend level = 4T for no delamination between EB-cured coating and topcoat
   Δ: T-bend level = 5T for no delamination between EB-cured coating and topcoat
   ×: T-bend level ≥ 6T for no delamination between EB-cured coating and topcoat
4.2 Cross-cut test: the test was carried out according to section 13 cross-cut adhesion test of GB/T 13448-2019, and the rating was carried out according to the rating table of cross-cut test shown in Table 1 of GB/T 13448-2019. The evaluation criteria are as follows:
   ⊚: Cross-cut test rating = grade 0 for no delamination between EB-cured coating and topcoat
   ∘: Cross-cut test rating = grades 1-2 for no delamination between EB-cured coating and topcoat
   Δ: Cross-cut test rating = grades 3-4 for no delamination between EB-cured coating and topcoat
   ×: Cross-cut test rating = grade 5 for no delamination between EB-cured coating and topcoat
4.3 Impact test: the test was carried out according to section 8 reverse impact test of GB/T 13448-2019. Test evaluation criteria are as follows:
   ⊚: Impact energy ≥ 9 J for no delamination between EB-cured coating and topcoat
   ∘: Impact energy = 7-9 J (excluding 9 J) for no delamination between EB-cured coating and topcoat
   Δ: Impact energy = 6-7 J (excluding 7 J) for no delamination between EB-cured coating and topcoat
   ×: Impact energy < 6 J for no delamination between EB-cured coating and topcoat
4.4 Corrosion resistance provided with topcoat test
   Neutral salt spray testing was conducted on flat panels according to ASTM B117 for 1000 hours. Evaluation was performed based on the comprehensive rating of protective coating aging performance levels shown in Table 23 of GB/T 1766-2008:
   ⊚: Blister density rating and blister size ≤ Grade 2
   ∘: Blister density rating and blister size ≤ Grade 3
   Δ: Blister density rating and blister size ≤ Grade 4
   ×: Blister density rating and blister size ≤ Grade 5

Table 3 lists the test data of the steel sheets with the electron-beam-cured coating layer in Examples 1-9 and Comparative Examples 1-9 after the above tests.

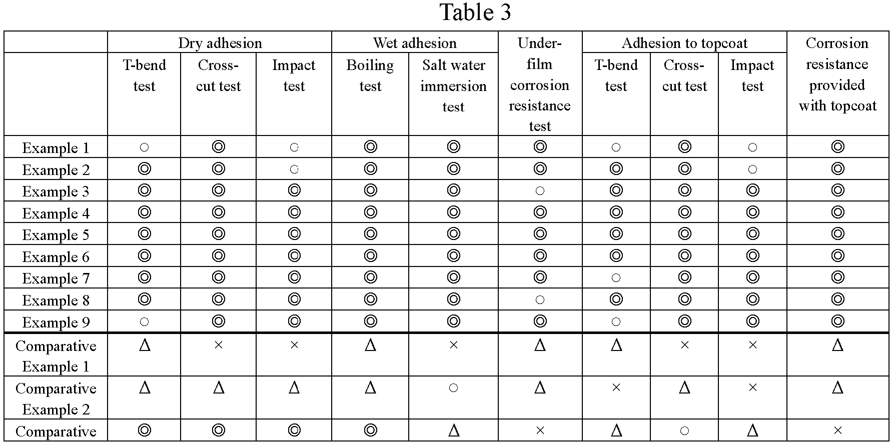

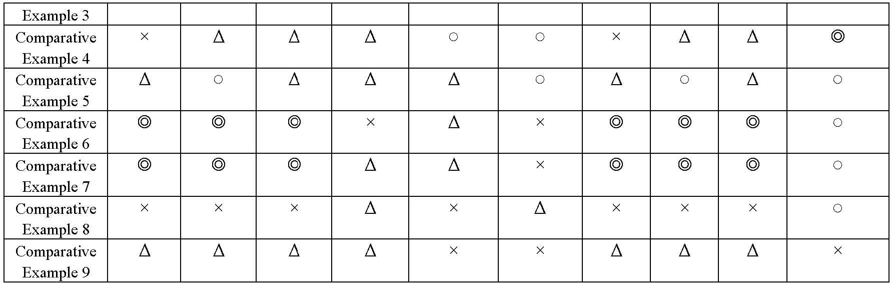

Combining Table 1 and Table 3, it can be seen that in Comparative Example 1, due to insufficient content of the composite matrix resin A and excessive content of monofunctional ethylenically unsaturated and polymerizable monomer C, the dry adhesion performance of the steel sheet of the electron-beam-cured coating layer is not conducive, and the insufficient dry adhesion directly affects the wet adhesion and under-film corrosion resistance performance.

In Comparative Example 2, the content of the organosilicon compound B is too high, which reduces the surface energy of the electron-beam-cured coating layer and decreases the adhesion performance between the electron-beam-cured coating layer and the subsequent topcoat. While the excessive content of the hiding pigment G negatively affected the dry adhesion performance of the coating.

In Comparative Example 3, the excessive content of acrylic acid phosphate compound D (as the adhesion promoter) resulted in poorer adhesion performance between the coating and the subsequent topcoat. Due to insufficient content of anti-rust pigment F, the anti-rust effect is not significant, which is manifested in the reduction of the under-film corrosion resistance of the electron-beam-cured coated steel sheet and the reduction of the corrosion resistance when combined with topcoat.

In Comparative Example 4, the excessive A1 to A2 ratio in the composite matrix resin A resulted in insufficient content of the amine modified epoxy diacrylate oligomer that mainly provides adhesion performance in the coating, adversely effecting both dry and wet adhesion properties. Moreover, the excessive content of the titanium salt or zirconium salt compound of acrylic acid E affected the flexibility of the coating, which in turn impacted the dry adhesion performance of the coating.

In Comparative Example 5, the excessive content of the composite matrix resin A caused a relative reduction in the proportion of components providing adhesion and corrosion inhibition and other functions, which is not conducive to the dry and wet adhesion properties of the coating. The insufficient content of monofunctional ethylenically unsaturated and polymerizable monomer C resulted in incomplete crosslinking and reduced dry adhesion performance of the coating.

In Comparative Example 6, the insufficient content of the organosilicon compound B failed to provide sufficient wet adhesion and under-film corrosion resistance performance for the coating.

In Comparative Example 7, the insufficient content of titanium salt or zirconium salt compound of acrylic acid E (as the interface corrosion inhibitor) showed insignificant under-film corrosion resistance effect. The insufficient content of the hiding pigment G resulted in inadequate covering effect of the coating.

In Comparative Example 8, the content of acrylic acid phosphate compound D (as an adhesion promoter) is low, resulting in poorer dry and wet adhesion performance of the coating. The excessive addition of anti-rust pigment F damaged the flexibility of the coating, thereby affecting the dry adhesion performance.

In Comparative Example 9, the absence of aliphatic polyurethane acrylate oligomer A1 affected the flexibility of the coating, which in turn impacted the dry adhesion performance of the coating. **In** addition, due to the coating thickness is smaller than the average particle size of the anti-rust pigment silica in the coating, this led to decreased wet adhesion performance of the coating and reduced overall corrosion resistance when combined with topcoat.

**In** contrast, the electron-beam-cured coated steel sheet in Examples 1-9 of the present invention all exhibited excellent dry and wet adhesion properties and under-film corrosion resistance performance and could form good adhesion properties and overall corrosion resistance with the topcoat.

It should be noted that the above-listed embodiments are only specific embodiments of the present invention. Obviously, the present invention is not limited to the above-mentioned embodiments, similar variations or modifications that can be directly derived or easily conceived by those skilled in the art from the content disclosed in the present invention should all fall within the protection scope of the present invention.

## Claims

1. A coating material for a steel sheet, wherein the coating material comprises the following effective components:
a composite matrix resin A: 40-60 parts by weight;
an organosilicon compound B: 3-10 parts by weight;
a monofunctional ethylenically unsaturated and polymerizable monomer C: 15-25 parts by weight;
an acrylic acid phosphate compound D: 5-15 parts by weight;
a titanium salt or zirconium salt compound of acrylic acid E: 0.3-2.0 parts by weight;
wherein the composite matrix resin A comprises an aliphatic polyurethane acrylate oligomer A1 and an amine modified epoxy diacrylate oligomer A2, with a weight ratio of A1 to A2 being 1.0-5.0; based on the weight of A1, A1 comprises 20-30 wt% of isobornyl acrylate, and based on the weight of A2, A2 comprises 30-40 wt% of dipropylene glycol diacrylate.

2. The coating material for a steel sheet according to claim 1, wherein effective components of the coating material consists of the following components:
a composite matrix resin A: 40-60 parts by weight;
an organosilicon compound B: 3-10 parts by weight;
a monofunctional ethylenically unsaturated and polymerizable monomer C: 15-25 parts by weight;
an acrylic acid phosphate compound D: 5-15 parts by weight;
a titanium salt or zirconium salt compound of acrylic acid E: 0.3-2.0 parts by weight;
wherein the composite matrix resin A comprises an aliphatic polyurethane acrylate oligomer A1 and an amine modified epoxy diacrylate oligomer A2, with a weight ratio of A1 to A2 being 1.0-5.0; based on the weight of A1, A1 comprises 20-30 wt% of isobornyl acrylate, and based on the weight of A2, A2 comprises 30-40 wt% of dipropylene glycol diacrylate.

3. The coating material for a steel sheet according to claim 1, wherein the effective components of the coating material further comprise at least one selected from the following:
an anti-rust pigment F: 2-5 parts by weight;
a hiding pigment G: 5-10 parts by weight;
an additive H: 0.2-1.0 parts by weight.

4. The coating material for a steel sheet according to any one of claims 1-3, wherein the weight ratio of A1 to A2 is 1.5-4.0.

5. The coating material for a steel sheet according to any one of claims 1-3, wherein the organosilicon compound B comprises at least one selected from the following: vinyltrimethoxysilane, vinyltris(2-methoxyethoxy)silane, vinyltriisopropoxysilane, methylvinyldimethoxysilane, vinyltriacetoxysilane, (methacryloxy)propyltriacetoxysilane, (triethoxysilyl)propyl methacrylate, and triethoxysilane methacrylate.

6. The coating material for a steel sheet according to any one of claims 1-3, wherein the monofunctional ethylenically unsaturated and polymerizable monomer C comprises at least one selected from the following: hydroxypropyl methacrylate, cyclic trimethylolpropane formal acrylate, cyclic trimethylolpropane formal monoacrylate, isobornyl acrylate, lauryl acrylate, lauryl methacrylate, and octyl/decyl acrylate.

7. The coating material for a steel sheet according to any one of claims 1-3, wherein the acrylic acid phosphate compound D comprises at least one selected from the following: polyethylene glycol methacrylate phosphate, bis(hydroxyethyl acrylate) phosphate, 2-hydroxyethyl methacrylate phosphate, and bis(methacryloyloxyethyl) hydrogen phosphate.

8. The coating material for a steel sheet according to any one of claims 1-3, wherein the titanium salt or zirconium salt compound of acrylic acid E comprises at least one selected from the following: titanium triisopropoxide methacrylate, zirconium acrylate, and zirconium tetrakis(methacrylate).

9. The coating material for a steel sheet according to claim 3, wherein the anti-rust pigment F comprises an ion-exchange-type alkaline silica powder.

10. The coating material for a steel sheet according to claim 9, wherein the ion-exchange-type alkaline silica powder has an average particle size of 2-6 µm and a pH of 8-10.

11. The coating material for a steel sheet according to claim 3, wherein the hiding pigment G comprises titanium dioxide.

12. The coating material for a steel sheet according to claim 3, wherein the additive H comprises at least one selected from the following: a leveling agent, a wetting agent, and an anti-settling agent.

13. A steel sheet, comprising a steel substrate, a plating layer on a surface of the steel substrate, and an electron-beam-cured coating layer on a surface of the plating layer, wherein the electron-beam-cured coating layer is formed by applying the coating material according to any one of claims 1 to 12 onto the surface of the plating layer followed by electron beam curing.

14. The steel sheet according to claim 13, wherein the electron-beam-cured coating layer has a single-layer structure.

15. The steel sheet according to claim 13, wherein the thickness of the electron-beam-cured coating layer is 3-30 µm, preferably 3-10 µm.

16. The steel sheet according to claim 13, wherein the plating layer comprises a hot-dip zinc layer, a hot-dip aluminum-zinc layer, a hot-dip zinc-aluminum-magnesium layer, and an electrogalvanized zinc layer.

17. The steel sheet according to claim 13, wherein the electron beam curing is carried out under the following conditions: in a nitrogen and oxygen mixture protective atmosphere with oxygen content of ≤ 200 ppm, the electron beam voltage is 90-150 kV, and the electron beam dose is 10-60 kGy.
